# EUROPEAN PATENT SPECIFICATION

(11) **EP 3 476 622 B1**
(45) Date of publication and mention of the grant of the patent: **20.11.2019**
(21) Application number: 18201621.2
(22) Date of filing: 19.10.2018
(51) Int. Cl.: B60B 25/00

(54) **WHEEL FOR VEHICLES**
FAHRZEUGRAD
ROUE POUR VÉHICULE

(30) Priority: 25.10.2017 IT 201700121258
(43) Date of publication of application: 01.05.2019
(73) Proprietor: Bridgestone Europe NV/SA, 1932 Zaventem (BE)
(72) Inventor: Crociani, Emanuele, 00128 Roma (IT)
(74) Representative: Marchetti, Alessio

(56) References cited:
- CN-A- 105 946 449
- DE-A1- 2 753 272
- DE-U1- 29 914 838
- FR-A1- 3 002 186

## Description

### TECHNICAL FIELD

The present invention relates to a wheel for vehicles.

### PRIOR ART

As is known, a pneumatic tyre comprises a toroidal casing, which features two annular tyre beads and supports an annular tread strip. Between the casing and the tread, a tread belt is interposed, which comprises a number of tread plies. The casing supports a pair of lateral walls (or sidewalls) arranged between the tread and the tyre beads. Within the casing ply, a skim is arranged that is impermeable to air. It constitutes an inner liner and has the function of holding the air within the pneumatic tyre in order to retain over the time the inflation pressure of the pneumatic tyre itself.

The tread strip comprises a rubber compound and features a pattern obtained on the outer surface in order to ensure good performance under all conditions of use. In particular, the composition of the rubber compound and the design of the tread pattern influence the behavior of the tyre both in the case of longitudinal stresses (when accelerating or braking) and in the case of transverse stresses (when following a curve); furthermore, the composition of the rubber compound and the design of the tread pattern influence the behavior of the tyre on the various types of roadbed (dry, wet, flooded, uneven, icy...).

The characteristics of the tread strip are necessarily determined such as to represent an acceptable compromise between the various requirements, and it is therefore not possible to optimize the performance of the pneumatic tyre under the various ground conditions or the various stresses to which it is subjected; for example, in order to confer to the pneumatic tyre a behavior that is at least fair on wet surfaces it is necessary to create water drainage routes that inevitably penalize the behavior on dry surfaces.

CN105946449 discloses a wheel type mechanism of which the radius can be adjusted. The wheel type mechanism comprises a wheel formed by a plurality of wheel spokes, wherein the wheel comprises the wheel spokes, and further comprises a radius adjusting assembly and a motor driving assembly.

### DESCRIPTION OF THE INVENTION

The object of the present invention is to provide a wheel for vehicles that is both free of the problems of the state of the art and that is, in particular, easy and cheap to manufacture.

According to the present invention a wheel for vehicles to that set forth in the appended claims is provided.

### BRIEF DESCRIPTION OF THE DRAWINGS

The present invention will now be described with reference to the attached drawings, illustrating a nonlimiting exemplary embodiment, wherein:
- Figure 1 is a front view of a first embodiment of a wheel for vehicles manufactured according to the present invention;
- Figure 2 is a side view of the wheel for vehicles of figure 1;
- Figure 3 is a partially exploded and perspective view of the wheel for vehicles of figure 1;
- Figure 4 is a perspective view of the wheel for vehicles of figure 1 in a different operational configuration;
- Figure 5 is a side view of the wheel for vehicles of figure 1 in a different operational configuration;
- Figure 6 illustrates the different ground footprints left by the wheel for vehicles of figure 1 under various operating conditions; and
- Figure 7 is a front view of a second embodiment of the wheel for vehicles of figure 1;

### PREFERRED EMBODIMENTS OF THE INVENTION

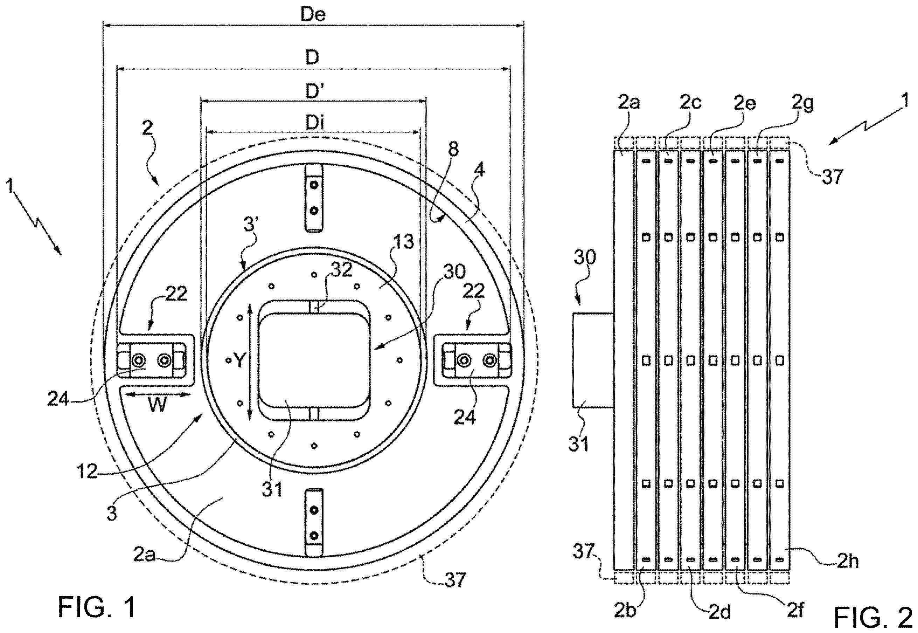

In figures 1 and 2, number 1 indicates a wheel for vehicles, as a whole, manufactured by means of a plurality of disks 2 substantially equal to one another, arranged side by side. In particular, wheel 1 is manufactured by means of eight disks 2, including an pair of outer disks 2a and 2h and six inner disks respectively referred to by 2b, 2c, 2d, 2e, 2f and 2g; it is also evident that wheel 1 can be manufactured by means of any number of disks 2. According to a preferred embodiment, the number of disks 2 is odd in number. According to a further embodiment, the number of disks 2 is between three and eleven; preferably, the number of disks 2 is between five and nine.

The disks 2 are preferably made of steel or aluminum alloy.

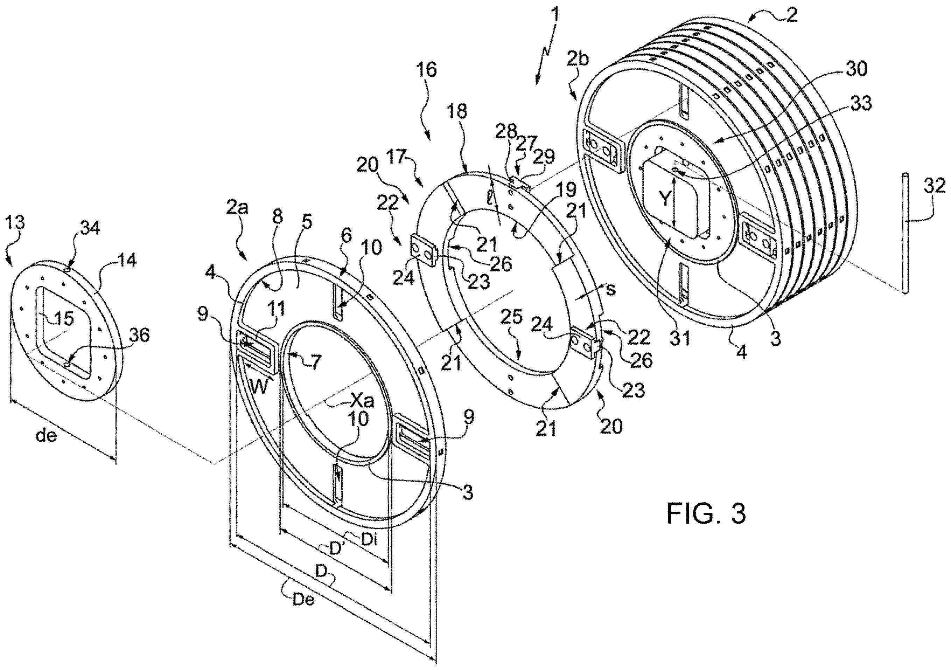

As better illustrated in figure 3, each disk 2 comprises an inner collar 3 which is coaxial to a rotation axis Xₐ and protrudes axially towards the outside of disk 2, and an outer collar 4 that is also coaxial to the rotation axis Xₐ and that also protrudes axially towards the outside of disk 2. The two inner and outer collars 3 and 4 are connected together by means of a central portion 5 implemented by means of a wall that is substantially flat.

Each disk 2 is also provided with an outer annular surface 6 and an inner annular surface 7 that define respectively an outer diameter Dₑ and an inner diameter Dᵢ of disk 2. In figures 1 and 3, D also refers to the diameter of an inner annular surface 8 of the outer collar 4 (which is equal to the outer diameter Dₑ from which the thickness of the outer collar 4 is subtracted) and D' refers to the diameter of an outer annular surface 3' of the inner collar 3 (which is equal to inner diameter Dᵢ to which the thickness of inner collar 3 is added).

In the preferred illustrated embodiment, the inner diameters Dᵢ and the outer diameters Dₑ of all of the disks 2 are equal therebetween. In alternative embodiments, the inner diameters Dᵢ and/or the outer diameters Dₑ of the disks 2 differ (at least partly) from one another.

The central portion 5 is divided into four sectors defined by as many apertures distributed evenly around the rotation axis Xₐ. In particular, two larger oblong shaped (substantially rectangular) apertures 9 are provided that are diametrically opposing with respect to the rotation axis Xₐ; and two smaller apertures 10, which are also oblong shaped (substantially rectangular), extending from outer collar 4 and that are diametrically opposing with respect to the rotation axis Xₐ. Preferably the larger apertures 9 extend from collar 4 and are delimited, at least from the front, by a portion 11 of the collar which protrudes transversely towards the outside of disk 2.

The wheel 1 then comprises a hub 12 whereupon the disks 2 rotate. The hub 12 is implemented by means of a plurality of plates 13 arranged side by side. In particular, the hub 12 is implemented by means of a number of plates 13 that is equal to the number of disks 2 and thus a respective disk 2 is associated with each plate 13. Plates 13 are substantially equal therebetween and are coaxial to the rotation axis Xₐ.

Each plate 13 has an outer annular surface 14 and a through aperture bounded by an inner surface 15 featuring a section that is substantially square shaped and with rounded corners.

The outer annular surface 14 defines an outer diameter dₑ that to the nearest tenth substantially approximates to the inner diameter Dᵢ of the disk 2.

Each plate 13 carries housed bearings or bushings (of a known type and not described in detail) in order to allow for the rolling and/or creeping of the respective disk 2 disk on the outer annular surface 14.

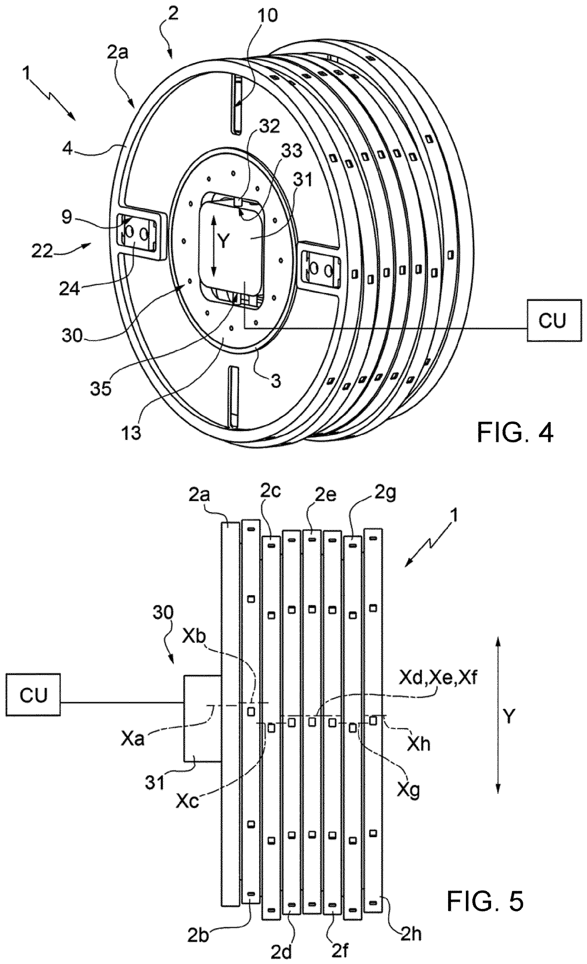

As better described in the discussion that follows and as illustrated in figures 4 and 5, in use disks 2 are free to shift to one another in a vertical direction and are carried in rotation at the same angular velocity around respective rotation axes that are non-overlapping and parallel therebetween (marked with Xₐ, X_{b}, X_{c}, X_{d}, Xₑ, X_{f}, X_{g}, Xₕ in Figure 5). In particular, disks 2 are free to shift along a transverse direction (preferably perpendicular) to the rolling plane of wheel 1.

In order to render the disks 2 integral at an angle therebetween, wheel 1 comprises a coupling joint 16 intended to transmit the torque between the rotation axes of disks 2 that are parallel therebetween but not coincident. According to a preferred embodiment, an Oldham coupling joint is employed. The Oldham coupling joint 16 is implemented by means of a plurality of rings 17 that are substantially equal therebetween. Each ring is interposed between two adjacent disks 2. In particular, according to the illustrated embodiment, the coupling joint 16 is implemented by means of seven rings 17 interposed between the eight disks 2.

The acceleration or deceleration torque is transmitted to the innermost disk 2 (by means of an appropriate flange connection of a known type) and the joint 16 is intended to transmit this torque between the disks 2.

As shown in Figure 3, each ring 17 is provided with an outer annular surface 18, wherein the diameter substantially approximates to the nearest tenth to the diameter D and with an inner annular surface 19, wherein the diameter substantially approximates to the nearest tenth to the diameter D' of the outer annular surface 3' of the inner collar 3. In other words, the width l of each ring 17 approximates to the nearest tenth to the width of the central portion 5 between the outer collar 4 and the inner collar 3.

With reference to that which is illustrated in Figure 3, two adjacent disks 2a and 2b are arranged side by side in such a way that they are almost touching, respectively, the two outer collars 4 and the two inner collars 3; the ring 17 is entirely housed within the compartment defined between the two adjacent disks 2a, 2b, in particular, within the compartment defined between the inner collars 3 and the outer collars 4 of the disks 2a, 2b arranged side by side. The maximum thickness of each ring 17 approximates to the nearest tenth to the width defined between the two disks 2a, 2b arranged side by side.

From the front, each ring 17 is divided into four portions that are uniformly distributed around the rotation axis Xₐ, two portions 20 thereof protrude towards the adjacent disk 2a, each of which is delimited by a pair of shoulders 21. The portions 20 are diametrically opposed with respect to the rotation axis Xₐ.

In particular, the protruding portions 20, carry, connected at an intermediate height, a coupling extension 22. The coupling extensions 22 are also diametrically opposed with respect to the rotation axis Xₐ; and comprise an arm 23 that connects to the ring 17 and a plate 24 intended to engage with a respective larger aperture 9 of the adjacent disk 2a. In particular, each plate 24 is provided with a front surface of a rectangular shape and of dimensions that approximate to the nearest tenth to the dimensions of the larger aperture 9. Each protruding portion 20 is intended to couple itself to the adjacent disk 2a by means of the respective coupling extensions 22 that are implemented such as to engage with the larger apertures 9 of said adjacent disk 2a. The larger apertures 9 have play with respect to the coupling extensions 22 in such a way as to move along a direction W between two extreme positions wherein each coupling extension 22 abuts against an inner surface of the respective larger aperture 9.

Within the rear surface 25 of each ring 17, in correspondence with the coupling extensions 22, there are in contrast two recesses 26 formed that are intended, in use, to house the larger apertures 9 of the adjacent disk 2b.

The rear surface 25 also carries two connected coupling extensions 27. In particular, the coupling extensions 27 are diametrically opposed with respect to the rotation axis Xₐ. The coupling extensions 22 and the coupling extensions 27 are uniformly distributed around the rotation axis Xₐ. The coupling extensions 27 comprise an arm 28 that connects to the ring 17 and a plate 29 intended to arrange itself in correspondence to a respective smaller aperture 10 of the adjacent disk 2b.

Finally, an actuator device 30 is housed within the plates 13. The actuator device 30 is preferably of the pneumatic type. According to a preferred alternative the actuator device 30 is implemented by means of a single pneumatic actuator.

Generally, the actuator device 30 comprises a tubular body 31 defining within the interior thereof, for each piston 32, a respective channel that is engaged in a sliding manner (in other words, a plurality of channels is defined, each destined for a corresponding piston 32); each piston 32 is movable along the vertical direction Y within the channel with a reciprocating rectilinear motion between an upper end of travel position and a lower end of travel position, and vice versa, under the thrust of an actuating element which is suitable for moving the piston 32. The actuator device 30 comprises a number of pistons 32 which is equal to the number of disks 2 and therefore to the number of plates 13. The actuator device 30 furthermore comprises an upper end of travel member and a lower end of travel member (not illustrated) associated with each respective piston 32 in order to arrest the travel of the respective piston 32.

In the alternate rectilinear motion along the Y direction vertical thereof, each piston 32 comes out from the tubular body 31 through a larger aperture 33 in order to engage with an upper through cavity 34 formed within the plate 13 with which it cooperates; and, similarly, each piston 32 comes out of the tubular body 31 through a lower aperture 35 and engages a lower through cavity, which is opposite the upper through cavity 34, obtained in plate 13 with which it cooperates.

The tubular body 31 has, in section, a form that is complementary to the shape of the surface bounded by the inner surface 15 and a dimension, measured along the vertical direction Y, that is less than the dimension of the through aperture bounded by the inner surface 15; in this way, the tubular body 31 can move along the vertical direction Y, within the through aperture bounded by the inner surface 15. In particular, the tubular body 31 has, in section, a substantially squared shape with rounded corners.

The device 30 is furthermore made in such a way as to be able to control the individual pistons 32 (each of which acts upon a respective disk 2 and upon a respective plate 13 in order to shift them along the vertical direction Y) independently of each other.

In particular, the actuator device 30 is connected to a control unit CU that is capable of independently driving the individual actuation elements which control the movement of the pistons 32 along the vertical direction Y.

The control unit CU is configured in order to determine the ground footprint FP which allows to optimize the performance of the vehicle and, subsequently, to independently control the individual actuating elements in such a way as to implement the ground footprint FP that allows to optimize the performance of the vehicle.

The ground footprint FP that allows to optimize the performance of the vehicle is in fact implemented by means of a set of footprint fp sections, each of which is defined by a respective disk 2. In other words, the number of footprint fp sections that define the ground footprint FP of the wheel 1 is equal to the number of disks 2.

In particular, the ground footprint FP that allows to optimize the performance of the vehicle is determined as a function of several parameters. Those parameters that are taken into account by the control unit CU in order to determine the ground footprint FP that allows to optimize the performance of the vehicle comprise, amongst others:
- the type of maneuver that the vehicle is engaged in and the type of stress to which the wheel 1 is being subjected (accelerating, braking, steering, moving at a constant speed, etc.);
- the conditions of the road being traveled by the vehicle (wet road, with ice and/or snow, etc.);
- the type of road being traveled by the vehicle (highway, city street, etc.);
- the performance of the wheel 1 in terms of noise and comfort, etc.; and
- the presence of any obstacles (potholes, unevenness, bumps, etc.).

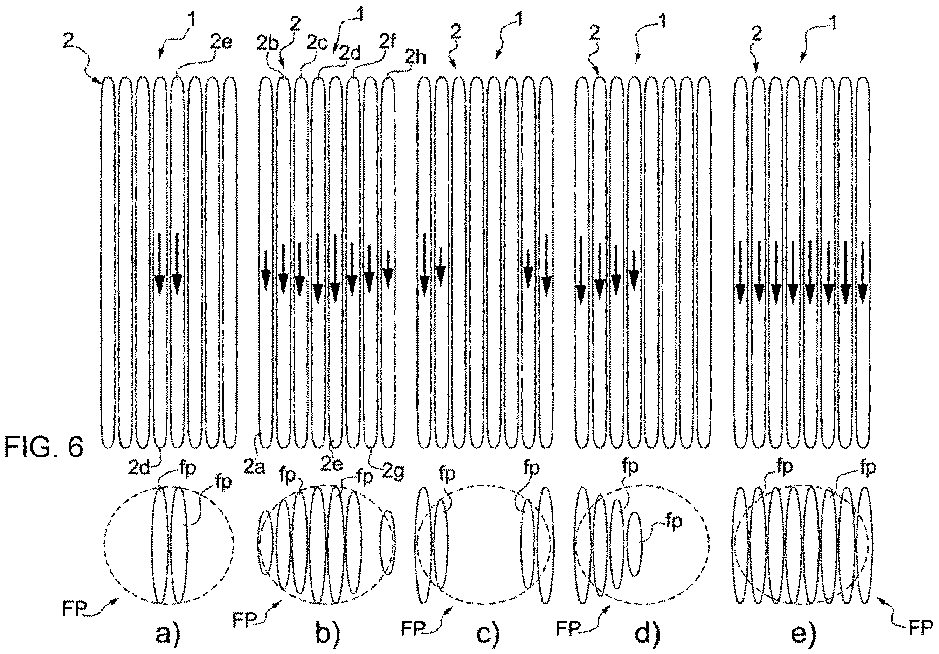

Figure 6 illustrates some different ground footprints that can be implemented by means of the wheel 1; wherein, for example, the ground footprint FP shown in Figure 6a is implemented in the case wherein the vehicle proceeds at a constant speed on the highway, the ground footprint FP shown in Figure 6e is implemented in the case of sudden braking while the ground footprints FP illustrated in the figures from 6b to 6d are implemented under intermediate conditions such as in the case of weak acceleration or steering.

Depending upon the different ground footprint FP to be implemented, the control unit CU is configured in such a way as to control the individual actuating elements in order to obtain the corresponding footprint fp sections. In other words, the control unit CU is configured in order to control the individual actuating elements in such a way that they provide pressure to the respective piston 32 in order to allow the latter to exert a force that is capable of moving the corresponding disk 2 and the corresponding plate 13 along the vertical direction Y in order to obtain the corresponding footprint fp section.

In order to implement the individual footprint fp sections, the disks 2 are shifted along the vertical direction Y with respect to one another in an independent manner and are brought into rotation at the same speed around the respective rotation axes Xₐ, X_{b}, X_{c}, X_{d}, Xₑ, X_{f}, X_{g}, Xₕ, which are not coincident and parallel therebetween.

It seems clear that, for example, in order to implement the ground footprint FP in figure 6b, the pressure applied to the central disks 2d, 2e is the maximum compared to the pressure applied to the peripheral disks 2a, 2b, 2c, 2f, 2g, 2h; whilst in order to implement the ground footprint FP in figure 6e, the same pressure is applied to all of the disks 2a, 2b, 2c, 2d, 2e, 2f, 2g, 2h.

According to a possible alternative, the actuator device 30 is of the hydraulic type.

According to a possible alternative, the actuator device 30 is implemented by means of a plurality of actuators, preferably of the pneumatic type, each of which is associated with a respective disk 2 and a respective plate 13 for the shifting thereof along the vertical direction Y.

According to a possible alternative, each disk 2 is externally enveloped by an annular tread belt 37 (schematically illustrated in figure 1) that can consist of a ring full of rubber or else it can feature within it a pressure air chamber; i.e. according to the latter alternative the assembly formed by each disk 2 and the respective plate 13 is used as a rim to which a pneumatic tyre is attached (of a known type and not described in detail) comprising a toroidal casing, at the sides of which there are two annular tyre beads, and that supports an annular tread strip. Within the casing ply, over the entire available surface, a skim is arranged that is impermeable to air, it constitutes an inner liner, and has the function of holding the air within the pneumatic tyre in order to retain over the time the inflation pressure of the pneumatic tyre itself.

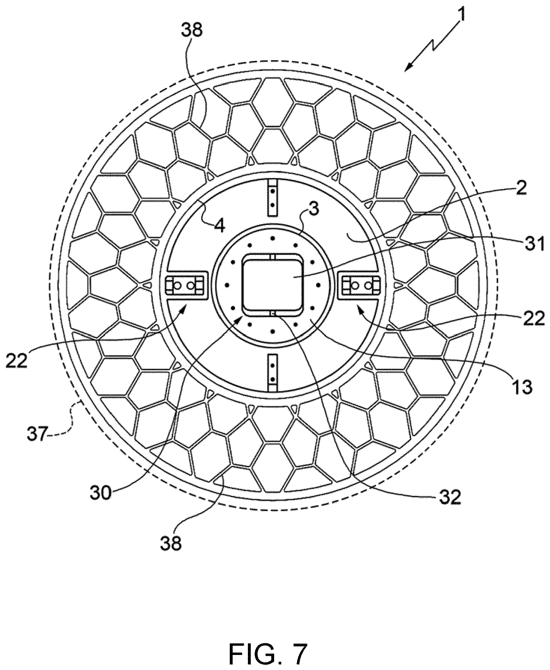

According to a further alternative illustrated in figure 7, each disk 2 is externally enveloped by an annular tread belt 37, which may consist of a ring full of rubber; between each tread belt 37 and the relative disk 2 an intermediate elastic structure 38 is interposed which is intended to provide radial elasticity to the wheel 1. This type of elastic structure 38 replaces the structure of the conventional pneumatic tyre in all the functions thereof, with the sole exception of the tread belt 37.

The elastic structure 38 is made from a plastic material; in particular, it has been verified that for the manufacture of the elastic structure 38 polymer materials are particularly suitable, of the fluoropolymers (PVDF) type, such as Teflon or polycarbonates (PC). According to a preferred alternative, the elastic structure 38 is provided with a honeycomb pattern.

The wheel 1 described so far allows to implement a variable ground footprint FP which is obtained by means of a number of footprint fp sections that is equal to the number of disks 2 that the wheel 1 is provided of; a ground footprint FP thus obtained is able to perfectly adapt itself to the different types of maneuver that the vehicle is engaged in or to the various stresses the wheel 1 is subjected to and, at the same time, to adapt itself to the different conditions of the road traveled by the vehicle that may occur; furthermore, the wheel 1 is also able to easily adapt itself to the presence of obstructions (such as potholes, unevenness, bumps, etc.).

In other words, the wheel 1 described above is capable of changing its own configuration (consequently varying the ground footprint FP thereof) in such a way as to optimize, from time to time, its own performance according to the external conditions at which it operates. Therefore, the performance offered by the wheel 1 described above is never the result of a compromise (downwards), but always the best achievable result with the best optimization.

## Claims

1. Wheel (1) for vehicles comprising a plurality of disks (2) substantially equal to each other, arranged side by side and revolving at the same angular velocity around respective rotation axes (Xₐ, X_{b}, X_{c}, X_{d}, Xₑ, X_{f}, X_{g}, Xₕ), parallel to each other;
the wheel (1) is **characterized in that** it comprises:
a coupling (16) which is capable of rendering the disks (2) integral at an angle therebetween, is intended to transmit the torque between the disks (2), and is capable of allowing for mutual sliding between the disks (2) along a vertical direction (Y), transverse to the rolling axis (Xa) of the wheel (1); and
at least one actuator device (30) that is capable of shifting each disk (2) along the vertical direction (Y) independently of the other disks (2), and in such way as to arrange the individual disks (2) with the respective rotation axes (X) parallel to each other and non-coincident.

2. Wheel according to claim 1, wherein:
a hub (12) is provided onto which the disks (2) rotate, which is implemented by means of a plurality of plates (13) arranged side by side;
each plate (13) is associated with a respective disk (2); and
the actuator device (30) is capable of shifting the assembly formed by each disk (2) and by the corresponding plate (13) along the vertical direction (Y).

3. Wheel according to claim 2, wherein each plate (13) carries housed on an annular outer surface (14) bearings or bushings in order to allow for the rolling and/or the creeping of the respective disk (2).

4. Wheel according to any one of the preceding claims, wherein:
a control unit (CU) is provided which is configured to determine a ground footprint (FP) to be implemented by means of a set of footprint (fp) sections;
each footprint (fp) section is implemented by means of a disk (2); and
the actuator device (30) is capable of shifting each disk (2) along the vertical direction (Y) as a function of the corresponding footprint section (fp).

5. Wheel according to claim 4, wherein the ground footprint (FP) is a function of several parameters such as the type of maneuver the vehicle is engaged in, the type of stress the wheel (1) is subjected to, the conditions of the road traveled by the vehicle, the type of the road being traveled by the vehicle, the presence of any obstacles such as potholes, unevenness, bumps.

6. Wheel according to any one of the preceding claims, wherein:
the actuator device (30) comprises a tubular body (31) defining within the interior thereof at least one channel that is engaged in a sliding manner by a respective piston (32); and
each piston (32) is movable along the vertical direction (Y) within the channel with a reciprocating rectilinear motion between an upper end of travel position and a lower end of travel position, and vice versa, and cooperates with a respective disk (2) in order to shift it along the vertical direction (Y).

7. Wheel according to one of the claims 1 to 6, and comprising a plurality of actuator devices (30), each of which cooperates with a respective disk (2) in order to shift it along the vertical direction (Y).

8. Wheel according to claim 6 or 7, wherein the actuator device (30) is a fluid-dynamic actuator.

9. Wheel according to any one of the preceding claims, wherein:
each disk (2) is provided with an annular outer collar (3) which protrudes towards the outside of the disk (2) itself and with an inner collar (4) which also protrudes towards the outside of the disk (2); and
the two inner and outer collars (3, 4) are connected together by means of a central portion (5) implemented by means of a substantially flat wall.

10. Wheel according to any one of the preceding claims, wherein the joint (16) is an Oldham joint and is implemented by means of a plurality of rings (17), each of which is interposed between two adjacent disks (2).

11. Wheel according to claim 10, wherein each ring (17) is entirely housed within the compartment defined between the two adjacent disks (2), in particular within the compartment defined between the inner (3) and outer collars (4) of two disks (2) arranged one facing the other.

12. Wheel according to claim 11, wherein:
each disk (2) is provided with at least two through-apertures (9), diametrically opposed with respect to one another; and
each ring (17) carries connected at least two coupling extensions (22) that are diametrically opposed to one another and that are intended to engage with a respective through-aperture (9) of the adjacent disk (2).

13. Wheel according to any one of the preceding claims, wherein each disk (2) is externally enveloped by a tread belt (37).

14. Wheel according to claim 13, wherein between each tread belt (37) and the respective disk (2) an elastic structure (38) is interposed which is intended to provide radial elasticity to the wheel (1);
wherein the elastic structure (38) is made of a plastic material, preferably of a polymer material.

15. Wheel according to any one of claims from 1 to 12, wherein each disk (2) supports a pneumatic tyre comprising a toroidal casing that supports an annular tread strip.

## Patentansprüche

1. Rad (1) für Fahrzeuge, eine Vielzahl von Scheiben (2) umfassend, die im Wesentlichen einander gleich sind, nebeneinander angeordnet sind und sich mit der gleichen Winkelgeschwindigkeit um jeweilige Drehachsen (Xₐ, X_{b}, X_{c}, X_{d}, Xₑ, X_{f}, X_{g}, Xₕ) drehen, die parallel zueinander sind;
wobei das Rad (1) **dadurch gekennzeichnet ist, dass** es umfasst:
eine Kupplung (16), die in der Lage ist, die Scheiben (2) mit einem Winkel dazwischen zu einer Einheit zusammenzufassen, die dafür bestimmt ist, das Drehmoment zwischen den Scheiben (2) zu übertragen, und in der Lage ist, ein gegenseitiges Gleiten zwischen den Scheiben (2) entlang einer vertikalen Richtung (Y), quer zur Rollachse (Xa) des Rads (1) zu ermöglichen;
und
mindestens eine Aktorvorrichtung (30), die in der Lage ist, die einzelnen Scheiben (2) entlang der vertikalen Richtung (Y) unabhängig von den anderen Scheiben (2) und auf solche Weise zu verschieben, dass die einzelnen Scheiben (2) mit den jeweiligen Drehachsen (X) parallel zueinander und nicht zusammenfallend angeordnet werden.

2. Rad nach Anspruch 1, wobei:
eine Nabe (12) bereitgestellt ist, auf der die Scheiben (2) sich drehen, die mittels einer Vielzahl nebeneinander angeordneter Platten (13) implementiert ist;
jede Platte (13) einer jeweiligen Scheibe (2) zugeordnet ist; und
die Aktorvorrichtung (30) in der Lage ist, die durch die einzelnen Scheiben (2) und durch die entsprechende Platte (13) gebildete Baugruppe entlang der vertikalen Richtung (Y) zu verschieben.

3. Rad nach Anspruch 2, wobei jede Platte (13) auf einer ringförmigen Außenoberfläche (14) aufgenommene Lager oder Buchsen trägt, um das Rollen und/oder Kriechen der jeweiligen Scheibe (2) zu ermöglichen.

4. Rad nach einem der vorhergehenden Ansprüche, wobei:
eine Steuereinheit (CU) bereitgestellt ist, die dafür ausgelegt ist, eine Aufstandsfläche (FP) zu bestimmen, die mittels eines Satzes von Aufstandsflächen-Abschnitten (FP-Abschnitten) zu implementieren ist;
jeder Aufstandsflächen-Abschnitt (FP-Abschnitt) mittels einer Scheibe (2) implementiert wird; und
die Aktorvorrichtung (30) in der Lage ist, die einzelnen Scheiben (2) in Abhängigkeit von dem Aufstandsflächen-Abschnitt (FP-Abschnitt) entlang der vertikalen Richtung (Y) zu verschieben.

5. Rad nach Anspruch 4, wobei die Aufstandsfläche (FP) von mehreren Parametern abhängig ist, wie etwa der Art des Manövers, mit dem das Fahrzeug befasst ist, der Art der Belastung, der das Rad (1) ausgesetzt ist, den Bedingungen der Straße, auf der das Fahrzeug fährt, der Art der Straße, auf der das Fahrzeug fährt, des Vorhandenseins etwaiger Hindernisse wie etwa Schlaglöchern, Unebenheiten, Erhebungen.

6. Rad nach einem der vorhergehenden Ansprüche, wobei:
die Aktorvorrichtung (30) einen rohrförmigen Körper (31) umfasst, der in seinem Inneren mindestens einen Kanal definiert, der durch einen jeweiligen Kolben (32) gleitend in Eingriff genommen wird; und
jeder Kolben (32) entlang der vertikalen Richtung (Y) innerhalb des Kanals mit einer hin- und hergehenden geradlinigen Bewegung zwischen einem oberen Ende einer Verfahrposition und einem unteren Ende einer Verfahrposition, und umgekehrt, bewegbar ist und mit einer jeweiligen Scheibe (2) zusammenwirkt, um sie entlang der vertikalen Richtung (Y) zu verschieben.

7. Rad nach einem der Ansprüche 1 bis 6, außerdem eine Vielzahl von Aktorvorrichtungen (30) umfassend, von denen jede mit einer jeweiligen Scheibe (2) zusammenwirkt, um sie entlang der vertikalen Richtung (Y) zu verschieben.

8. Rad nach Anspruch 6 oder 7, wobei die Aktorvorrichtung (30) ein fluiddynamischer Aktor ist.

9. Rad nach einem der vorhergehenden Ansprüche, wobei:
jede Scheibe (2) mit einer ringförmigen äußeren Hülse (3), die zur Außenseite der Scheibe (2) selbst vorsteht, und mit einer inneren Hülse (4), die ebenfalls zur Außenseite der Scheibe (2) vorsteht, bereitgestellt ist; und
die innere und die äußere Hülse (3, 4) beide mittels eines zentralen Abschnitts (5) miteinander verbunden sind, der mittels einer im Wesentlichen flachen Wand implementiert wird.

10. Rad nach einem der vorhergehenden Ansprüche, wobei das Gelenk (16) ein Oldham-Gelenk ist und mittels einer Vielzahl von Ringen (17) implementiert wird, von denen jeder zwischen zwei einander benachbarten Scheiben (2) angeordnet ist.

11. Rad nach Anspruch 10, wobei jeder Ring (17) vollständig in dem Fach aufgenommen ist, das zwischen den beiden einander benachbarten Scheiben (2) definiert ist, genauer in dem Fach, das zwischen der inneren (3) und der äußeren Hülse (4) der beiden Scheiben (2), die einander gegenüber angeordnet sind, definiert ist.

12. Rad nach Anspruch 11, wobei:
jede Scheibe (2) mit wenigstens zwei durchgehenden Öffnungen (9) versehen ist, die einander diametral gegenüberliegen; und
jeder Ring (17) mindestens zwei mit ihm verbundene Kupplungsvorsprünge (22) trägt, die einander diametral gegenüberliegen und die mit einer jeweiligen durchgehenden Öffnung (9) der benachbarten Scheibe (2) in Eingriff zu bringen sind.

13. Rad nach einem der vorhergehenden Ansprüche, wobei jede Scheibe (2) außen von einem Laufflächengurt (37) umgeben ist.

14. Rad nach Anspruch 13, wobei zwischen jedem Laufflächengürtel (37) und der jeweiligen Scheibe (2) eine elastische Struktur (38) angeordnet ist, die dem Rad (1) radiale Elastizität verleihen soll;
wobei die elastische Struktur (38) aus einem Kunststoffmaterial, vorzugsweise aus einem Polymermaterial, hergestellt ist.

15. Rad nach einem der Ansprüche 1 bis 12, wobei jede Scheibe (2) einen Luftreifen trägt, der ein torusförmiges Gehäuse umfasst, das einen ringförmigen Laufflächenstreifen trägt.

## Revendications

1. Roue (1) pour véhicules comprenant une pluralité de disques (2) essentiellement égaux les uns aux autres, disposés côte à côte et tournant à la même vitesse angulaire autour d'axes de rotation respectifs (Xₐ, X_{b}, X_{c}, X_{d}, Xₑ, X_{f}, X_{g}, Xₕ), parallèles les uns aux autres ;
la roue (1) est **caractérisée en ce qu'**elle comprend :
un accouplement (16) apte à rendre les disques (2) solidaires à un angle entre eux, est destiné à transmettre le couple entre les disques (2) et est apte à permettre un coulissement mutuel entre les disques (2) le long d'une direction verticale (Y), transversale à l'axe de roulement (Xa) de
la roue (1) ; et
au moins un dispositif d'actionnement (30) apte à décaler chaque disque (2) le long de la direction verticale (Y) indépendamment des autres disques (2) et de manière à agencer les disques individuels (2) avec les axes de rotation respectifs (X) parallèles entre eux et ne coïncidant pas.

2. Roue selon la revendication 1, dans laquelle :
un moyeu (12) est prévu sur lequel les disques (2) tournent, qui est mis en œuvre au moyen d'une pluralité de plaques (13) disposées côte à côte ;
chaque plaque (13) est associée à un disque (2) respectif ; et
le dispositif d'actionnement (30) est apte à déplacer l'ensemble formé par chaque disque (2) et par la plaque correspondante (13) le long de la direction verticale (Y).

3. Roue selon la revendication 2, dans laquelle chaque plaque (13) porte, logés sur une surface extérieure annulaire (14) des paliers ou des bagues pour permettre le roulement et/ou le fluage du disque (2) respectif.

4. Roue selon l'une quelconque des revendications précédentes, dans laquelle :
une unité de commande (CU) est prévue, qui est configurée pour déterminer une empreinte au sol (FP) devant être mise en œuvre au moyen d'un ensemble de sections d'empreinte (fp) ;
chaque section d'empreinte (fp) est mise en œuvre au moyen d'un disque (2) ; et
le dispositif d'actionnement (30) est apte à décaler chaque disque (2) le long de la direction verticale (Y) en fonction de la section d'empreinte (fp) correspondante.

5. Roue selon la revendication 4, dans laquelle l'empreinte au sol (FP) est une fonction de plusieurs paramètres tels que le type de manœuvre effectuée par le véhicule, le type de contrainte que la roue (1) subit, les conditions de la route sur laquelle le véhicule se déplace, le type de la route sur laquelle le véhicule se déplace, la présence d'obstacles quelconques tels que des nids de poule, des inégalités, des bosses.

6. Roue selon l'une quelconque des revendications précédentes, dans laquelle :
le dispositif d'actionnement (30) comprend un corps tubulaire (31) définissant à l'intérieur de celui-ci au moins un canal qui est engagé de manière coulissante par un piston respectif (32) ; et
chaque piston (32) est mobile le long de la direction verticale (Y) au sein du canal avec un mouvement rectiligne alternatif entre une extrémité supérieure de position de déplacement et une extrémité inférieure de position de déplacement et inversement et coopère avec un disque (2) respectif pour le décaler le long de la direction verticale (Y).

7. Roue selon l'une des revendications 1 à 6, et comprenant une pluralité de dispositifs d'actionnement (30), dont chacun coopère avec un disque (2) respectif pour le décaler le long de la direction verticale (Y).

8. Roue selon la revendication 6 ou 7, dans laquelle le dispositif d'actionnement (30) est un actionneur hydrodynamique.

9. Roue selon l'une quelconque des revendications précédentes, dans laquelle :
chaque disque (2) est pourvu d'une collerette extérieure annulaire (3) qui fait saillie vers l'extérieur du disque (2) lui-même et d'une collerette intérieure (4) qui fait également saillie vers l'extérieur du disque (2) ; et
les deux collerettes intérieure et extérieure (3, 4) sont reliées entre elles au moyen d'une partie centrale (5) mise en œuvre au moyen d'une paroi sensiblement plane.

10. Roue selon l'une quelconque des revendications précédentes, dans laquelle le joint (16) est un joint d'Oldham et est mis en œuvre au moyen d'une pluralité d'anneaux (17), dont chacun est interposé entre deux disques adjacents (2).

11. Roue selon la revendication 10, dans laquelle chaque anneau (17) est entièrement logé dans le compartiment défini entre les deux disques adjacents (2), notamment dans le compartiment défini entre les collerettes intérieure (3) et extérieure (4) de deux disques (2) disposés l'un en face de l'autre.

12. Roue selon la revendication 11, dans laquelle :
chaque disque (2) est pourvu d'au moins deux ouvertures traversantes (9), diamétralement opposées l'une par rapport à l'autre ; et
chaque anneau (17) porte au moins deux prolongements d'accouplement (22) reliés diamétralement opposés l'un à l'autre et destinés à coopérer avec une ouverture traversante (9) respective du disque adjacent (2).

13. Roue selon l'une quelconque des revendications précédentes, dans laquelle chaque disque (2) est enveloppé extérieurement par une bande de roulement (37).

14. Roue selon la revendication 13, dans laquelle entre chaque bande de roulement (37) et le disque (2) respectif est interposée une structure élastique (38) destinée à assurer une élasticité radiale à la roue (1) ;
dans laquelle la structure élastique (38) est faite d'une matière plastique, de préférence d'un matériau polymère.

15. Roue selon l'une quelconque des revendications 1 à 12, dans laquelle chaque disque (2) supporte un bandage pneumatique comportant une enveloppe toroïdale qui supporte une bande annulaire de roulement.
